# EUROPÄISCHE PATENTSCHRIFT

(11) **EP 1 451 450 B1**
(45) Veröffentlichungstag und Bekanntmachung des Hinweises auf die Patenterteilung: **07.03.2007**
(21) Anmeldenummer: 02781497.9
(22) Anmeldetag: 13.11.2002
(51) Int. Cl.: F01D 25/24, F01D 9/04

(54) **GASTURBOGRUPPE**
GAS TURBO GROUP
ENSEMBLE TURBINE A GAZ

(30) Priorität: 20.11.2001 CH 21262001
(43) Veröffentlichungstag der Anmeldung: 01.09.2004
(73) Patentinhaber: Alstom Technology Ltd, 5400 Baden (CH)
(72) Erfinder: GEBHARDT, Andreas, CH-8800 Thalwil (CH)
(86) Internationale Anmeldenummer: PCT/IB2002/004736
(87) Internationale Veröffentlichungsnummer: WO 2003/044329

(56) Entgegenhaltungen:
- CH-A- 305 532
- DE-A- 19 544 011
- FR-A- 967 431
- GB-A- 695 724
- US-A- 3 004 700
- US-A- 4 522 559
- US-A- 4 778 337
- US-A- 5 275 532
- US-B1- 6 179 560

## Beschreibung

### TECHNISCHES GEBIET

Die vorliegende Erfindung bezieht sich auf das Gebiet der Turbinen. Sie betrifft eine Gasturbogruppe gemäss dem Oberbegriff des Anspruchs 1.

### STAND DER TECHNIK

Die Temperatur des Arbeitsmediums einer solchen Gasturbogruppe kann sich in Abhängigkeit vom aktuellen Betriebszustand relativ schnell ändern. Insbesondere beim Anfahren, Abstellen und bei Laständerungen werden die vom Arbeitsmedium durchströmten Bauteile stark erhitzt bzw. abgekühlt, während die anderen Bauteile eine wesentlich langsamere Temperaturänderung erfahren.

Bekannt sind Gasturbogruppen mit einer der Führung des Arbeitsmediums dienenden Innenschalen und mit einem Aussengehäuse zur Abstützung und Zentrierung der Innenschalen. Solche Gehäuse und Innenschalen besitzen eine relativ geringe Masse. Sie werden daher relativ schnell aufgeheizt und können schnell wieder abkühlen. Demgegenüber dauert sowohl das Aufheizen als auch das Abkühlen der Rotoren von Verdichter und Turbine, aufgrund ihrer grossen Masse, wesentlich länger. Wegen der daraus resultierenden, unterschiedlichen Wärmedehnung der genannten Bauteile muss das Schaufelspiel so gross sein, dass bei allen Betriebsbedingungen ein Streifen der Laufschaufeln an den Innenschalen bzw. der Leitschaufeln an der Rotorwelle vermieden wird. Das grösste Spiel wird bei einem sogenannten Warmstart benötigt. Um dieses Schaufelspiel zu gewährleisten, muss bei Vollast ein grösseres als das an sich erforderliche Spiel in Kauf genommen werden. Dadurch wird jedoch die Effizienz der Gasturbogruppe herabgesetzt.

Bei den bekannten, mit einem Aussengehäuse ausgestatteten Gasturbogruppen übernimmt dieses sowohl die Tragfunktion für die Innenschale, als auch die durch das Arbeitsmedium entstehende Druckbelastung. Aufgrund dieser Doppelfunktion kann das Aussengehäuse nicht optimal an eine der beiden Aufgaben angepasst werden, weil dabei Abstriche bei der jeweils anderen Funktion nötig wären.

Insbesondere muss bei jedem Schaufelwechsel die Gasturbogruppe in der Mittelebene geöffnet werden, was sehr arbeitsaufwendig ist. Zudem kann mit dem Austausch der Schaufeln erst dann begonnen werden, wenn die Anlage ausreichend abgekühlt ist. Daraus resultieren lange Stillstandzeiten, verbunden mit einem entsprechenden Leistungsausfall der Gasturbogruppe.

Um die Gasturbogruppe einfacher und schneller montieren bzw. demontieren zu können, wird bei anderen Lösungen das Aussengehäuse mehrteilig ausgebildet. Die verschiedenen Gehäuseteile sind bei diesen Lösungen sowohl in axialer Richtung als auch in der Trennebene durch Flansche miteinander verbunden. Eine solche Konstruktion ist jedoch aufwendig und damit teuer.

In DE 195 44 011 ist eine Gasturbogruppe vorgeschlagen worden, wie sie in den Fig. 1 bis 3 wiedergegeben ist.

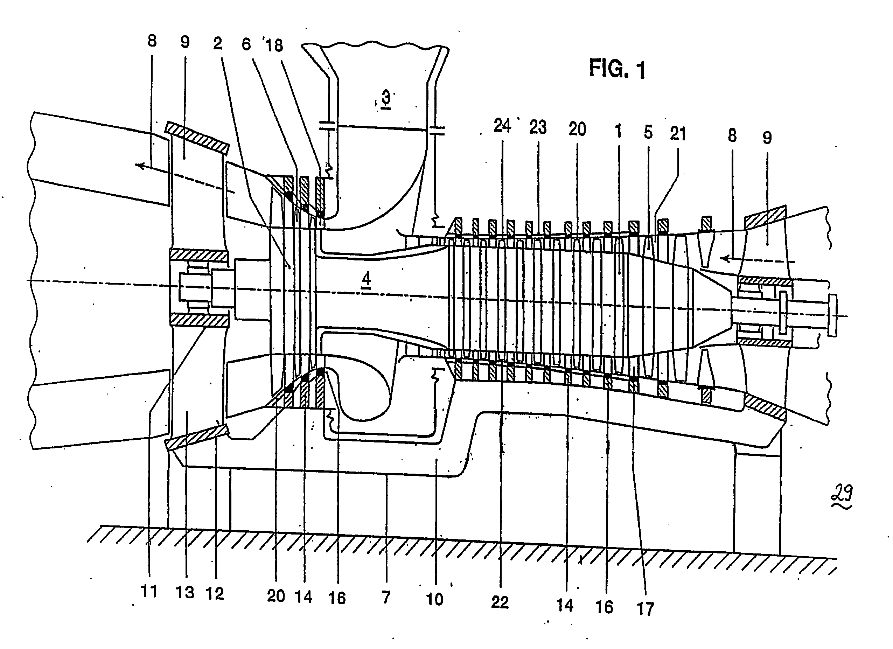

Die in den Fig. 1 bis 3 gezeigte Gasturbogruppe 29 besteht aus einem Verdichter 1, einer Turbine 2 und einer dazwischen angeordneten Brennkammer 3. Der Verdichter 1 und die Turbine 2 sind auf einer gemeinsamen Rotorwelle 4 angeordnet, welche mehreren Reihen von Verdichterlaufschaufeln 5 und Turbinenlaufschaufeln 6 trägt (Fig. 1).

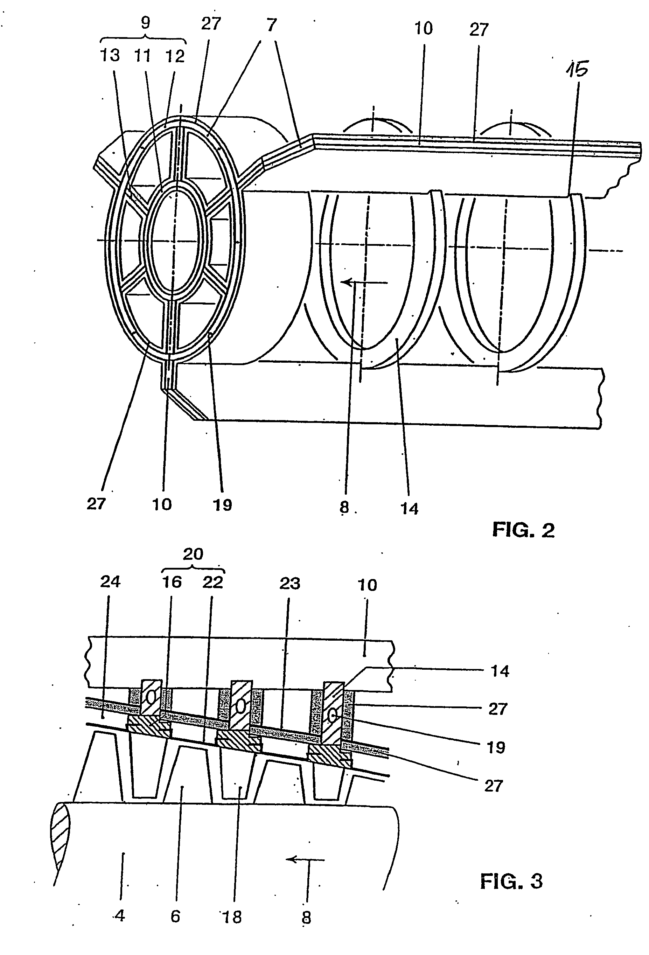

Die Gasturbogruppe 29 besitzt ein gemeinsames Aussengehäuse 7 in Form einer Tragstruktur, bestehend aus zwei vertikal zur Strömungsrichtung 8 des Arbeitsmediums angeordneten Lagerkreuzen 9 sowie zwei oder mehreren rechtwinklig dazu ausgerichteten, die Lagerkreuze 9 miteinander verbindenden Längsträgern 10. Jedes Lagerkreuz 9 wird von zwei konzentrischen Ringen 11, 12 gebildet. Zur Verbindung der Ringe 11, 12 sind zwischen ihnen radiale Rippen 13 angeordnet. Die Längsträger 10 sind gleichmässig auf dem Umfang des Aussenringes 12 verteilt und mit diesem auf geeignete Weise lösbar oder unlösbar, beispielsweise durch eine Schweissverbindung, verbunden (Fig. 2).

Im Raum zwischen den Lagerkreuzen 9 und den Längsträgern 10 sind mehrere, als ringförmige Tragscheiben ausgebildete Schaufelträger 14 rechtwinklig zur Achse der Rotorwelle 4 angeordnet und formschlüssig mit den Längsträgern 10 verbunden. Dazu weisen die Tragscheiben 14 entsprechende Ausnehmungen 15 auf (Fig. 2), die der Form der Längsträger 10 entsprechen. Die Tragscheiben 14 sind somit axial verschiebbar an den Längsträgern 10 befestigt. Zur Fixierung ihrer Axialposition können die Tragscheiben 14 zusätzlich mit den Längsträgern 10 verschraubt werden (nicht dargestellt). Natürlich ist ebenfalls eine kraftschlüssige oder eine stoffschlüssige Verbindung oder eine Kombination an sich bekannter Verbindungsarten möglich. An den Tragscheiben 14 ist mittels Schaufelfüssen 16 eine entsprechende Anzahl von Verdichterleitschaufeln 17 bzw. Turbinenleitschaufeln 18 (Fig. 1, 3) befestigt.

Im stromabwärtigen Bereich des Verdichters 1 sowie auf der Turbinenseite sind, im Inneren der Lagerkreuze 9, der Längsträger 10 und der Tragscheiben 14, mit dem Verdichter 1 verbundene Kühlkanäle 19 oder andere geeignete Mittel, die mit einem flüssigen oder gasförmigen Kühlfluid beaufschlagbar sind, angeordnet (Fig. 2, 3). Es ist ebenfalls möglich, die Mittel oder Kühlkanäle 19 seitlich anzuordnen. Die Kühlung kann auch über eine externe Kühlquelle realisiert werden.

Sowohl der Verdichter 1 als auch die Turbine 2 besitzen jeweils eine Innenschale 20 (Fig. 1), welche gemeinsam mit der Oberfläche der Rotorwelle 4 einen Strömungsweg 21 für das Arbeitsmedium bildet und diesen nach aussen abschliesst. Dazu sind, in axialer Richtung zwischen den Schaufelfüssen 16 benachbarter Leitschaufelreihen 17 bzw. 18 des Verdichters 1 bzw. der Turbine 2, mehrere Wärmestausegmente 22 lösbar angeordnet, welche gemeinsam mit den Schaufelfüssen 16 die Innenschale 20 bilden (Fig. 1, 3).

Die Tragscheiben 14 benachbarter Leitschaufelreihen 18 der Turbine 2 sind mittels jeweils einem lösbar angeordneten Druckring 23 verbunden (Fig. 1, 3). Analoge Druckringe 23 sind im stromabwärtigen Bereich des Verdichters 1, zwischen den Tragscheiben 14 benachbarter Leitschaufelreihen 17 angeordnet (Fig. 1). Zwischen jedem der Druckringe 23 und den entsprechenden Wärmestausegmenten 22 ist ein Ringraum 24 ausgebildet (Fig. 3). Die Ringräume 24 sind mit dem Verdichter 1 verbunden. Sie können natürlich auch von aussen mit einem externen Kühlmedium gespeist werden. Die Tragscheiben 14 weisen in ihrem inneren Bereich in bekannter Weise Schwalbenschwanzführungen und die Schaufelfüsse 16 entsprechend ausgeformte Gegenstücke auf, welche der Arretierung der Verdichter- bzw. Turbinenleitschaufeln 17, 18 dienen.

Das Aussengehäuse 7 und die Tragscheibe 14 weisen aufgrund ihrer Kühlung stets eine weitgehend konstante Temperatur auf. Daher bleiben auch die Schaufelfüsse 16 der Verdichter- bzw. Turbinenleitschaufeln 17, 18 an der Tragscheibe 14 auf einem konstanten Radius. Das minimale Schaufelspiel kann dadurch auf den Vollastpunkt ausgelegt werden. Gleichzeitig besteht selbst bei einem Warmstart keine Gefahr des Streifens der Leitschaufeln 17, 18 an der Rotorwelle 4 bzw. der Laufschaufeln 5, 6 an den Wärmestausegmenten 22. Deshalb kann das Betriebsspiel sowohl bei der Turbine 2 als auch beim Verdichter 1 verringert werden, wodurch der Wirkungsgrad steigt.

Der Schaufelwechsel erfolgt von ausserhalb des käfigartigen Aussengehäuses 7 bzw. der Tragstruktur, d.h. durch diese(s) hindurch. Dazu werden zuerst der Druckring 23 und anschliessend die Wärmestausegmente 22 entfernt, welche in Strömungsrichtung 8 vor der Tragscheibe 14 mit den auszutauschenden Verdichter- bzw. Turbinenleitschaufeln 17, 18 angeordnet sind. Zum Abstützen der Schaufeln wird eine einfache, hier nicht dargestellte Hilfsvorrichtung verwendet. Danach wird die Tragscheibe 14 in ihrer Ausnehmung 15 entgegen der Strömungsrichtung 8 horizontal verschoben. Nunmehr sind die Verdichter- bzw. Turbinenleitschaufeln 17, 18 frei zugänglich, so dass deren Demontage erfolgen kann. Dadurch wird schliesslich auch der Platz zum Austauschen von Verdichter- bzw. Turbinenlaufschaufeln 5, 6 geschaffen. Die Montage geschieht in umgekehrter Reihenfolge.

Die Lagerkreuze 9, die Längsträger 10 und die Tragscheiben 14 sind vorzugsweise zusätzlich mit einer Funktionsschicht zur thermischen Isolation, Wärmeschutzschicht 27, aus keramisch/mineralischem Material überzogen (Fig. 2, 3). Auf den Druckringen 23 ist ebenfalls eine solche Wärmeschutzschicht 27 angeordnet (Fig. 3). Natürlich kann auch eine Wärmeschutzmatte verwendet werden. Um die Stabilität der Verbindungen zu gewährleisten sind die jeweiligen Verbindungsbereiche dieser Bauteile ohne Wärmeschutzschicht 27 ausgebildet.

Die in den Fig. 1 bis 3 gezeigte Lösung bringt jedoch Probleme mit sich, die vor allem in einer aufwendigen Montage/Demontage der Verdichterleitschaufeln 17 Turbinenleitschaufeln 18 ihre Ursache haben (siehe die o.g. Erläuterung zum Schaufelwechsel).

In den Druckschriften US-A-5,127,797 und US-A-5,564,897 sind Gasturbogruppen beschrieben, bei denen im Verdichterteil die Leitschaufeln einer Leitschaufelreihe jeweils zu mehreren auf einem Ringsegment angeordnet sind und mit dem Ringsegment montiert bzw. demontiert werden können. Die Befestigung der Ringsegmente ist jedoch so ausgebildet, dass zur Demontage das gesamte Aussengehäuse des Verdichters demontiert werden muss.

In der US 6,179,560 ist eine Turbine beschrieben, bei der ein ringsegmentförmiges Element der ersten Leitschaufelreihe der Turbine unter Beibehaltung einer Tragstruktur demontiert werden kann. Der Zugang erfolgt aus dem Gehäuseinneren, nachdem die Turbine vom Gesamtaggregat abgeflanscht worden ist, und erfordert dem gemäss eine Demontage des Gesamtaggregats.

### DARSTELLUNG DER ERFINDUNG

Es ist daher Aufgabe der Erfindung, eine Gasturbogruppe so auszubilden, dass die Nachteile des Standes der Technik vermieden werden, dass insbesondere die Montage bzw. Demontage der Leitschaufeln drastisch vereinfacht wird, und, dass kleinere Betriebs-Schaufelspiele möglich sind.

Die Aufgabe wird durch die Gesamtheit der Merkmale des Anspruchs 1 gelöst. Der Kern der Erfindung besteht darin, Leitschaufeln einer Leitschaufelreihe jeweils in mehreren separaten Ringsegmenten zu haltern, welche zusammen einen vollständigen Ring mit wenigstens einer Leitschaufelreihe bilden, und die Ringsegmente an einer äusseren Tragstruktur lösbar zu befestigen, derart, dass die Ringsegmente mit den an ihnen befestigten Leitschaufeln von der Tragstruktur unter Beibehaltung der Tragstruktur einzeln abgenommen werden können. Die Erfindung ist dadurch gekennzeichnet, dass die Tragstruktur eine Mehrzahl von in axialer Richtung hintereinander koaxial angeordneter, voneinander beabstandeter ringförmiger Tragscheiben umfasst, welche durch mehrere sich in axialer Richtung erstreckende Längsträger miteinander verbunden sind, und dass die Ringsegmente zwischen benachbarten Tragscheiben angeordnet sind. Hierdurch ist es möglich, direkt und ohne Demontage der Gasturbogruppe als solcher die Leitschaufeln aus- und wieder einzubauen.

Besonders einfach ist die Montage/Demontage, wenn gemäss einer bevorzugten Ausgestaltung der Erfindung die Ringsegmente jeweils Verdichterleitschaufeln bzw. Turbinenleitschaufeln mehrerer benachbarten Leitschaufelreihen tragen.

Eine weitere Vereinfachung bei der Montage/Demontage der Gasturbogruppe insgesamt ergibt sich, wenn gemäss einer anderen bevorzugten Ausgestaltung der Erfindung die Brennkammer ringförmig ausgebildet ist und eine Mehrzahl von

Ringsegmenten umfasst, welche an der Tragstruktur lösbar befestigt sind und von der Tragstruktur unter Beibehaltung der Tragstruktur abgenommen werden können, wobei insbesondere in der Brennkammer eine Mehrzahl von Brennern angeordnet sein kann, welche den einzelnen Ringsegmenten zugeordnet sind und zusammen mit diesen abgenommen werden können.

Die Erfindung kann dabei ebenfalls ohne Weiteres mit der aus DE 195 44 011 bekannten Kühlung der Tragstrukturen kombiniert werden. Daraus ergibt sich wie einleitend beschrieben die vorteilhafte Möglichkeit, die Schaufelspiele für ein Erreichen eines Minimums unter Vollastbedingungen der Gasturbogruppezu dimensionieren.

In Verbindung mit der an sich aus dem Stand der Technik bekannten Kühlung der Tragstruktur ergibt sich bei Anwendung der Erfindung weiterhin auch der Vorteil, unmittelbar oder wenigstens in vergleichsweise kurzer Zeit nach dem Abstellen der Gasturbogruppe mit der Demontage der Leitschaufeln beginnen zu können.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: im Längsschnitt den Aufbau einer Gasturbogruppe mit einer äusseren Tragstruktur aus dem Stand der Technik;
- Fig. 2: eine perspektivische Darstellung der Tragstruktur aus Fig. 1;
- Fig. 3: in einem vergrösserten Ausschnitt die Anordnung der Leit- und Laufschaufeln in der Gasturbogruppe nach Fig. 1;
- Fig. 4: in einer zu Fig. 1 vergleichbaren Darstellung ein bevorzugtes Ausführungsbeispiel einer erfindungsgemässen Gasturbogruppe;
- Fig. 5: eine vergrösserte Darstellung der Anordnung eines Ringsegmentes in der Tragstruktur am Umfang es Rotor;
- Fig. 6: eine Querschnittsdarstellung zur Verdeutlichung der Anordnung der Ringsegmente in Umfangsrichtung.

### WEGE ZUR AUSFÜHRUNG DER ERFINDUNG

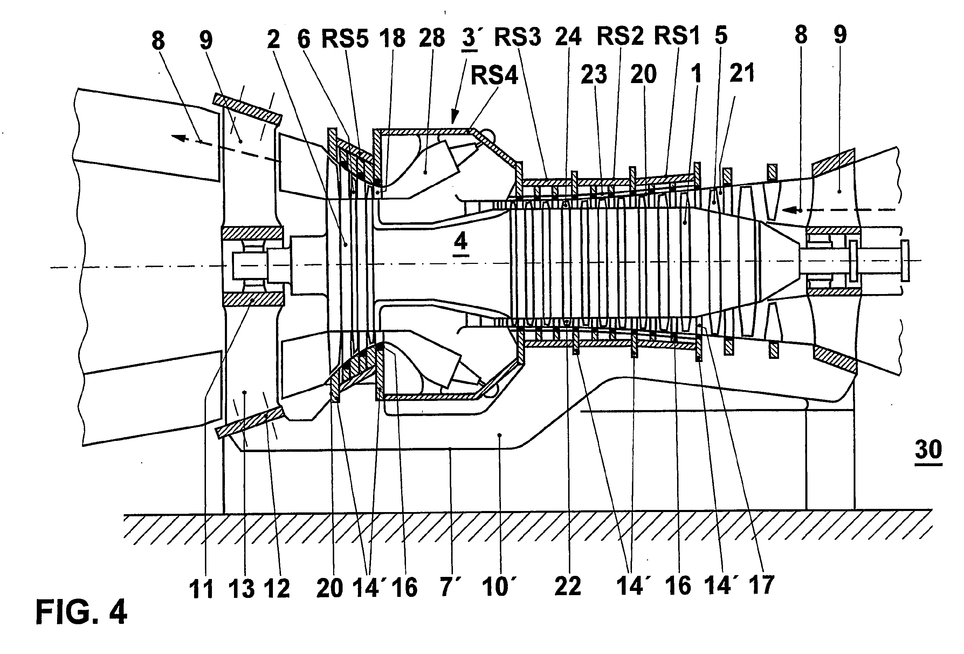

In Fig. 4 ist in einer zu Fig. 1 vergleichbaren Darstellung ein bevorzugtes Ausführungsbeispiel einer erfindungsgemässen Gasturbogruppe dargestellt. Die einzelnen Elemente der Gasturbogruppe 30 sind, soweit sie mit der Darstellung in Fig. 1 übereinstimmen, mit denselben Bezugszeichen bezeichnet.

Die wesentlichen Unterschiede zwischen der Gasturbogruppe 30 aus Fig. 4 und der Gasturbogruppe 29 aus Fig. 1 liegen in dem Aufbau des Aussengehäuses bzw. der äusseren Tragstruktur 7 bzw. 7', der Befestigung der Leitschaufeln im Verdichter 1 und in der Turbine 2, sowie in Form und Aufbau der Brennkammer 3 bzw. 3'.

Das Aussengehäuse bzw. die Tragstruktur 7' besteht auch bei der Gasturbogruppe 30 aus zwei Lagerkreuzen 9, den Längsträgern 10' und mehreren Tragscheiben 14' und hat damit eine zu Fig. 2 vergleichbare Konfiguration. Anders als in Fig. 1 ist jedoch nicht eine Tragscheibe pro Leitschaufelreihe vorgesehen, sondern es sind vergleichsweise wenig Tragscheiben 14' mit einem deutlich grösseren Abstand untereinander vorhanden. Die Tragscheiben 14 können zwar auch direkt Leitschaufeln tragen, haben jedoch eigentlich die Aufgabe, die Befestigung von Ringsegmenten RS1, RS2, RS3, RS5 an der Tragstruktur 7' zu ermöglichen. Jeweils mehrere, beispielsweise 5 bis 10, dieser Ringsegmente RS1, RS2, RS3, RS5 bilden für sich genommen einen zur Rotorwelle 4 konzentrischen, innen isolierten Ring um die Rotorwelle 4, auf dessen Innenseite mehrere (im Beispiel der Fig. 4 zwei) Leitschaufelreihen hintereinander angeordnet sind. Die Ringsegmente RS1, RS2, RS3, RS5 sind jeweils zwischen benachbarten Tragscheiben 14' angeordnet und befestigt und können einzeln montiert bzw. demontiert werden. Dabei können die Ringsegmente beispielsweise mit den Tragscheiben in Flanschverbindungen verschraubt sein, wie in der Figur durch angedeutete Schrauben oder Stehbolzen 25 beispielhaft dargestellt. Auch können die Ringsegmente mittel formschlüssiger Aufnahmen in den Tragscheiben der Tragstruktur eingehängt sein. Sehr von Vorteil ist es dabei, wenn zum Ausgleich thermischer Differenzdehnungen die Ringsegmente RS1, RS2, RS3, RS4, RS5 gegenüber der Tragstruktur, insbesondere gegenüber den Tragscheiben 14', eine gewisse Verschieblichkeit aufweisen, wobei aber in radialer Richtung geeignete Massnahmen getroffen werden müssen, um die Ringsegmente derart an den Tragscheiben zu fixieren, dass Anstreifschäden zwischen dem Rotor 4 und den Ringsegmenten beziehungsweise den Laufschaufeln vermieden werden. Auch untereinander können die an einer axialen Position angeordneten Ringsegmente verschraubt sein; sie können ebenso aber auch gegeneinander verschieblich aneinander stossen, was zum Ausgleich thermischer Dehnungen sehr von Vorteil sein kann. Möglichkeiten, auch solche gegenseitig verschieblichen Einzelteile gegeneinander gasdicht abzudichten, sind dem Fachmann beispielsweise von der Anordnung von Wärmestausegmenten geläufig..

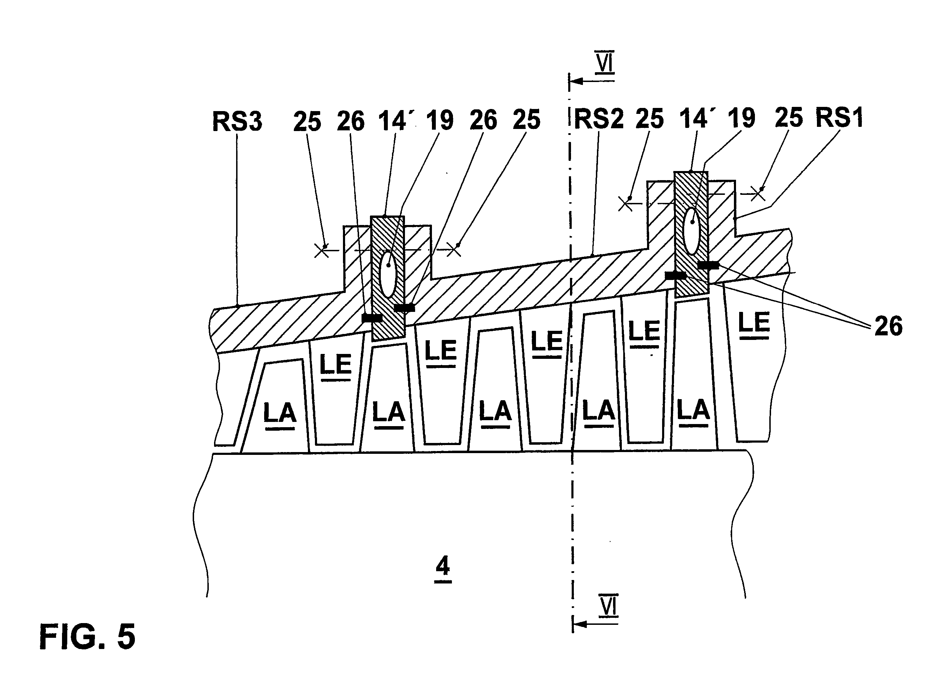

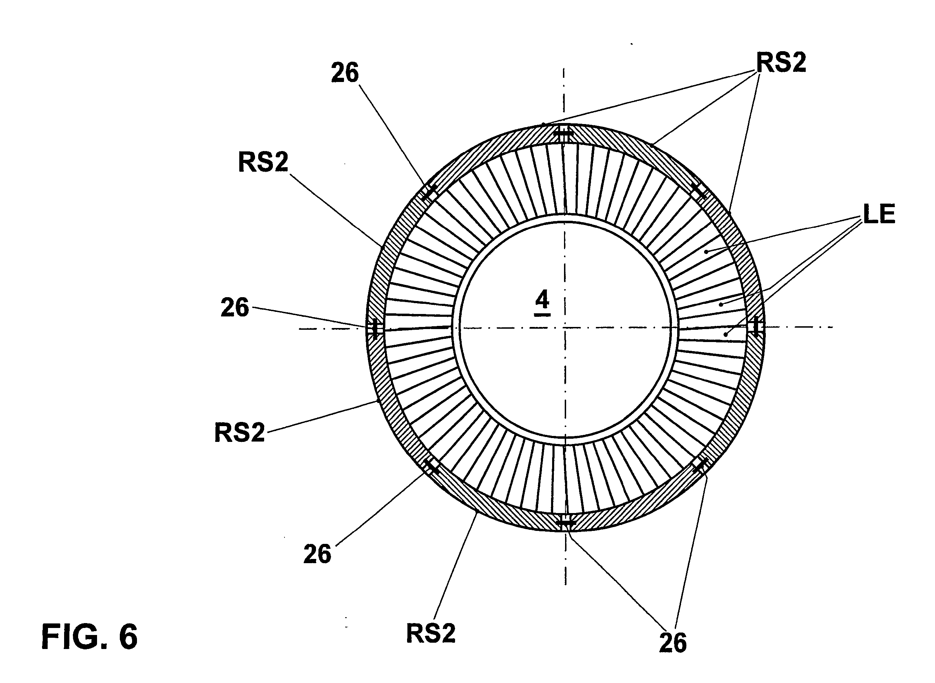

Figur 5 zeigt eine vergrösserte Ansicht der Anordnung von Ringsegmenten. Tragscheiben 14' der Tragstruktur sind, wie im Zusammenhang mit Figur 3 beschrieben, mit Kühlkanälen 19 versehen. Die vorteilhafte Kühlung der Tragstruktur ermöglicht minimale Schaufelspiele und damit geringste Spaltmass im Betrieb. Axial zwischen zwei Tragscheiben ist ein Ringsegment RS2 angeordnet. Dieses trägt Leitschaufeln LE dreier Leitschaufelreihen. Die Schaufeln LE der Leitschaufelreihen sind im Einbauzustand axial abwechselnd mit auf der Rotorwelle 4 angeordneten Laufschaufeln LA der Laufschaufelreihen angeordnet. Figur 6 zeigt einen schematischen Querschnitt im axialen Bereich der Ringsegmente RS2. Am Umfang sind hier beispielsweise 8 Ringsegmente RS2 angeordnet, welche zusammen einen Gehäusering bilden, und die Leitschaufeln LE tragen. Wie oben erwähnt, können diese 8 Ringsegmente miteinander verschraubt sein; sie können aber ebenso und mit Vorteil auch gegeneinander verschieblich aneinander stossen, was zum Ausgleich thermischer Dehnungen sehr von Vorteil sein kann. Möglichkeiten, auch solche gegenseitig verschieblichen Einzelteile gegeneinander gasdicht abzudichten, sind dem Fachmann beispielsweise von der Anordnung von Wärmestausegmenten geläufig. Mittig ist die Rotorwelle 4 mit den hier nicht sichtbaren Laufschaufeln LA angeordnet. Wie aus der Darstellung ersichtlich ist, kann jedes der Ringsegmente RS2, wenn die Verbindung mit der Tragstruktur und gegebenenfalls untereinender gelöst ist, leicht in radialer Richtung demontiert werden. An der Tragstruktur werden die Ringssegmente beispielsweise mittels in der Figur 5 angedeuteten Schrauben- oder Stehbolzenverbindungen 25 angeflanscht. Sehr von Vorteil ist es dabei, wenn zum Ausgleich thermischer Differenzdehnungen die Ringsegmente RS1, RS2, RS3, RS4, RS5 gegenüber der Tragstruktur, insbesondere gegenüber den Tragscheiben 14', eine gewisse Verschieblichkeit aufweisen, wobei aber in radialer Richtung geeignete Massnahmen getroffen werden müssen, um die Ringsegmente derart an den Tragscheiben zu fixieren, dass Anstreifschäden zwischen dem Rotor 4 und den Ringsegmenten beziehungsweise den Laufschaufeln vermieden werden. Um trotz der verschieblichen Anordnung eine Abdichtung für das Arbeitsmediums zu erzielen, sind im dargestellten Ausführungsbeispiel in Nuten der Ringsegmente und Tragscheiben Dichtelemente 26, beispielsweise Dichtstreifen eingelegt. Diese haben in den Nuten Spiel, und erlauben damit eine im Wesentlichen durch die Dimension der Nut vorgegebene Beweglichkeit der aneinandergrenzenden Bauteile. Wenn im Betrieb eine Druckdifferenz zwischen dem in der Maschine strömenden Arbeitsmedium und der Umgebung auftritt, werden diese Dichtstreifen durch die Druckdifferenz an die Nutwände angepresst und bewirken so eine Abdichtung. In Figur 6 sind die Dichtstreifen 26 auch zur Abdichtung der in Umfangsricgtung aneinanderstossenden ringsegmente angedeutet.

Die erfindungsgemässe Bauweise hat folgenden Vorteil: Bei Schäden an den Leitschaufeln können diese schnell behoben werden, da ein Öffnen der Gasturbogruppe insgesamt nicht mehr nötig ist. Das Ringsegment mit den beschädigten Leitschaufeln wird einfach demontiert und gegen ein neues ausgetauscht. Das Aussengehäuse bzw. die Tragstruktur 7' bleibt dabei unverändert. Zusätzlich ist die Temperatur der Ringsegmente wenn sie, analog zu Figur 3 mit einer Innenisolation versehen sind relativ kalt, wodurch für die Demontage der Segmente eine kürzere Abkühlzeit nach dem Abstellen möglich wird.

Die Segmentierung der Leitschaufelreihen und die damit verbundenen Vorteile erstrecken sich vorzugsweise auf den Verdichter 1 (Ringsegmente RS1,..,RS3) und die Turbine 2 (Ringsegmente RS5). Eine weitere Vereinfachung bei der Montage/Demontage lässt sich erreichen, wenn eine ringförmige Brennkammer 3' mit mehreren in einem Ring angeordneten Brennern 28 vorgesehen wird. In diesem Fall kann auch die Brennkammer 3' eine Mehrzahl von Ringsegmenten RS4 umfassen, welche an der Tragstruktur 7' bzw. 9, 10', 14' lösbar befestigt sind und von der Tragstruktur 7' bzw. 9, 10', 14' unter Beibehaltung der Tragstruktur abgenommen werden können, wenn beispielsweise einer der Brenner 28 gewartet oder ausgetauscht werden muss.

Insgesamt ergibt sich mit der Erfindung eine wesentliche Vereinfachung bei der Montage/Demontage der Leitschaufelreihen in einer Gasturbogruppe.

### BEZUGSZEICHENLISTE

- 1: Verdichter
- 2: Turbine
- 3,3': Brennkammer
- 4: Rotorwelle
- 5: Verdichterlaufschaufel
- 6: Turbinenlaufschaufel
- 7,7': Aussengehäuse (Tragstruktur)
- 8: Strömungsrichtung
- 9: Lagerkreuz
- 10,10': Längsträger
- 11: Ring
- 12: Ring, Aussenring
- 13: Rippe
- 14,14': Schaufelträger, Tragscheibe
- 15: Ausnehmung
- 16: Schaufelfuss
- 17: Verdichterleitschaufel (Leitschaufelreihe)
- 18: Turbinenleitschaufel (Leitschaufelreihe)
- 19: Kühlkanal
- 20: Innenschale
- 21: Strömungsweg
- 22: Wärmestausegment
- 23: Druckring
- 24: Ringraum
- 25: Schrauben- oder Stehbolzenverbindung
- 26: Dichtelement, Dichtstreifen
- 27: Wärmeschutzschicht
- 28: Brenner
- 29,30: Gasturbogruppe
- RS1,..,RS5: Ringsegment

## Patentansprüche

1. Gasturbogruppe (30), umfassend wenigstens einen Verdichter (1), wenigstens eine Brennkammer (3') sowie wenigstens eine Turbine (2), wobei auf einer gemeinsamen Rotorwelle (4) innerhalb des Verdichters (1) mehrere Reihen von Verdichterlaufschaufeln (5) und innerhalb der Turbine (2) mehrere Reihen von Turbinenlaufschaufeln (6) angeordnet sind, welche sich in Durchströmungsrichtung mit Leitschaufelreihen von Verdichterleitschaufeln (17) bzw. Turbinenleitschaufeln (18) abwechseln, die an einer die Rotorwelle (4) umgebenden Struktur (7' bzw. 9, 10', 14') befestigt sind, wobei die Verdichterleitschaufeln (17) und/oder die Turbinenleitschaufeln (18) einer Leitschaufelreihe in mehreren separaten Ringsegmenten (RS1,..,RS3 bzw. RS5) befestigt sind, und mehrere in Umfangsrichtung aneinandergrenzend angeordnete Ringsegmente zusammen einen vollständigen Ring mit wenigstens einer Leitschaufelreihe bilden, und die Ringsegmente (RS1,..,RS3 bzw. RS5) an einer Tragstruktur (7' bzw. 9, 10', 14') lösbar befestigt sind, derart, dass die Ringsegmente (RS1,..,RS3 bzw. RS5) mit den an ihnen befestigten Verdichterleitschaufeln (17) bzw. Turbinenleitschaufeln (18) von der Tragstruktur (7' bzw. 9, 10', 14') unter Beibehaltung der Tragstruktur (7' bzw. 9, 10', 14') einzeln abnehmbar sind, **dadurch gekennzeichnet, dass** die Tragstruktur (7') eine Mehrzahl von in axialer Richtung hintereinander koaxial angeordneter, voneinander beabstandeter ringförmiger Tragscheiben (14') umfasst, welche durch mehrere sich in axialer Richtung erstreckende Längsträger (10') miteinander verbunden sind und dass die Ringsegmente (RS1,..RS5) zwischen benachbarten Tragscheiben (14') angeordnet sind.

2. Gasturbogruppe nach Anspruch 1, **dadurch gekennzeichnet, dass** die Ringsegmente (RS1,..,RS3; RS5) jeweils Verdichterleitschaufeln (17) bzw. Turbinenleitschaufeln (18) mehrerer in Durchströmungsrichtung benachbarter Leitschaufelreihen tragen.

3. Gasturbogruppe nach einem der Ansprüche 1 oder 2, **dadurch gekennzeichnet, dass** die Brennkammer (3') ringförmig ausgebildet ist und eine Mehrzahl von Ringsegmenten (RS4) umfasst, welche an der Tragstruktur (7' bzw. 9, 10', 14') lösbar befestigt sind und von der Tragstruktur (7' bzw. 9, 10', 14') unter Beibehaltung der Tragstruktur (7' bzw. 9, 10', 14') abgenommen werden können.

4. Gasturbogruppe nach Anspruch 3, **dadurch gekennzeichnet, dass** in der Brennkammer (3') eine Mehrzahl von Brennern (28) angeordnet sind, und dass die Brenner (28) den einzelnen Ringsegmenten (RS4) zugeordnet sind und zusammen mit diesen abgenommen werden können.

5. Gasturbogruppe nach einem der vorstehenden Ansprüche, **dadurch gekennzeichnet, dass** Ringsegmente mit der Tragstruktur durch Flanschverbindungen verbunden sind.

6. Gasturbogruppe nach einem der vorstehenden Ansprüche, **dadurch gekennzeichnet, dass** die Ringsegmente (RS1,..,RS3; RS5) für die Leitschaufeln (17, 18) eine Innenisolation aufweisen.

7. Gasturbogruppe nach einem der vorstehenden Ansprüche, **dadurch gekennzeichnet, dass** die Tragstruktur (7') geeignete Mittel (19) zur Beaufschlagung mit einem Kühlfluid aufweist.

8. Gasturbogruppe nach einem der vorstehenden Ansprüche, **dadurch gekennzeichnet, dass** die Tragstruktur (7') eine Funktionsschicht (27) zur thermischen Isolation aufweist.

## Claims

1. Gas turbo set (30), comprising at least one compressor (1), at least one combustion chamber (3') and at least one turbine (2), a common rotor shaft (4) having arranged on it, within the compressor (1), a plurality of rows of compressor moving blades (5) and, within the turbine (2), a plurality of rows of turbine moving blades (6), which alternate in the throughflow direction with guide vane rows of compressor guide vanes (17) and turbine guide vanes (18) which are fastened to a structure (7' or 9, 10', 14') surrounding the rotor shaft (4), the compressor guide vanes (17) and/or the turbine guide vanes (18) of a guide vane row being fastened in a plurality of separate annular segments (RS1, ..., RS3 or RS5), and a plurality of annular segments arranged contiguously to one another in the circumferential direction together forming a complete ring with at least one guide vane row, and the annular segments (RS1, ..., RS3 or RS5) being fastened releasably to a carrying structure (7' or 9, 10', 14'), in such a way that the annular segments (RS1, ..., RS3 or RS5), together with the compressor guide vanes (17) or turbine guide vanes (18) fastened to them, can be removed individually from the carrying structure (7' or 9, 10', 14'), while the carrying structure (7' or 9, 10', 14') is maintained, **characterized in that** the carrying structure (7') comprises a plurality of annular carrying disks (14') which are arranged coaxially one behind the other in the axial direction and are spaced apart from one another and which are connected to one another by means of a plurality of longitudinal members (10') extending in the axial direction, and **in that** the annular segments (RS1, ... RS5) are arranged between adjacent carrying disks (14').

2. Gas turbo set according to claim 1, **characterized in that** the annular segments (RS1, ..., RS3; RS5) in each case carry compressor guide vanes (17) or turbine guide vanes (18) of a plurality of guide vane rows adjacent in the throughflow direction.

3. Gas turbo set according to either one of claims 1 or 2, **characterized in that** the combustion chamber (3') has an annular design and comprises a plurality of annular segments (RS4) which are fastened releasably to the carrying structure (7' or 9, 10', 14') and which can be removed from the carrying structure (7' or 9, 10', 14'), while the carrying structure (7' or 9, 10', 14') is maintained.

4. Gas turbo set according to claim 3, **characterized in that** a plurality of burners (28) are arranged in the combustion chamber (3'), and **in that** the burners (28) are assigned to the individual annular segments (RS4) and can be removed together with these.

5. Gas turbo set according to one of the preceding claims, **characterized in that** annular segments are connected to the carrying structure by means of flanged connections.

6. Gas turbo set according to one of the preceding claims, **characterized in that** the annular segments (RS1, ..., RS3; RS5) for the guide vanes (17, 18) have internal insulation.

7. Gas turbo set according to one of the preceding claims, **characterized in that** the carrying structure (7') has suitable means (19) for applying a cooling fluid.

8. Gas turbo set according to one of the preceding claims, **characterized in that** the carrying structure (7') has a functional layer (27) for thermal insulation.

## Revendications

1. Groupe générateur à turbine à gaz (30), comprenant au moins un compresseur (1), au moins une chambre de combustion (3') et au moins une turbine (2), plusieurs rangées d'aubes mobiles de compresseur (5) étant disposées à l'intérieur du compresseur (1) et plusieurs rangées d'aubes mobiles de turbine (6) étant disposées à l'intérieur de la turbine (2), sur un arbre de rotor commun (4), lesquelles sont disposées en alternance dans le sens de l'écoulement avec des rangées d'aubes directrices de compresseur (17), respectivement de turbine (18), qui sont fixées à une structure (7', respectivement 9, 10', 14') entourant l'arbre de rotor (4), les aubes directrices de compresseur (17) et/ou les aubes directrices de turbine (18) d'une rangée d'aubes directrices étant fixées dans plusieurs segments annulaires séparés (RS1, .., RS3, respectivement RS5), et plusieurs segments annulaires disposés de manière juxtaposée dans la direction périphérique formant conjointement un anneau complet avec au moins une rangée d'aubes directrices, et les segments annulaires (RS1, .., RS3, respectivement RS5) étant fixés de manière détachable sur une structure porteuse (7', respectivement 9, 10', 14') de telle sorte que les segments annulaires (RS1, .., RS3, respectivement RS5), puissent être enlevés individuellement de la structure porteuse (7', respectivement 9, 10',' 14') avec les aubes directrices de compresseur (17) ou de turbine (18) fixées sur ceux-ci en conservant la structure porteuse (7', respectivement 9, 10', 14'), **caractérisé en ce que** la structure porteuse (7') comprend une pluralité de disques porteurs (14') de forme annulaire espacés les uns des autres et disposés coaxialement les uns derrière les autres dans la direction axiale, qui sont connectés ensemble par plusieurs supports longitudinaux (10') s'étendant dans la direction axiale, et **en ce que** les segments annulaires (RS1,...,RS5) sont disposés entre des disques porteurs adjacents (14').

2. Groupe générateur à turbine à gaz selon la revendication 1, **caractérisé en ce que** les segments annulaires (RS1, .., RS3 ; RS5) portent à chaque fois des aubes directrices de compresseur (17) ou de turbine (18) de plusieurs rangées d'aubes directrices adjacentes dans le sens de l'écoulement.

3. Groupe générateur à turbine à gaz selon l'une quelconque des revendications 1 ou 2, **caractérisé en ce que** la chambre de combustion (3') est réalisée sous forme annulaire et comprend une pluralité de segments annulaires (RS4) qui sont fixés de manière détachable sur la structure porteuse (7', respectivement 9, 10', 14') et peuvent être enlevés de la structure porteuse (7', respectivement 9, 10', 14') en conservant la structure porteuse (7', respectivement 9, 10', 14').

4. Groupe générateur à turbine à gaz selon la revendication 3, **caractérisé en ce qu'**une pluralité de brûleurs (28) sont disposés dans la chambre de combustion (3'), et **en ce que** les brûleurs (28) sont associés aux segments annulaires individuels (RS4) et peuvent être enlevés conjointement avec ceux-ci.

5. Groupe générateur à turbine à gaz selon l'une quelconque des revendications précédentes, **caractérisé en ce que** des segments annulaires sont connectés à la structure porteuse par des connexions par brides.

6. Groupe générateur à turbine à gaz selon l'une quelconque des revendications précédentes, **caractérisé en ce que** les segments annulaires (RS1,.., RS3 ; RS5) pour les aubes directrices (17, 18) présentent une isolation interne.

7. Groupe générateur à turbine à gaz selon l'une quelconque des revendications précédentes, **caractérisé en ce que** la structure porteuse (7') présente des moyens appropriés (19) pour la sollicitation avec un fluide de refroidissement.

8. Groupe générateur à turbine à gaz selon l'une quelconque des revendications précédentes, **caractérisé en ce que** la structure porteuse (7') présente une couche fonctionnelle (27) pour l'isolation thermique.
